# EUROPEAN PATENT APPLICATION

(11) **EP 2 369 841 A2**
(43) Date of publication of application: **28.09.2011**
(21) Application number: 11159682.1
(22) Date of filing: 24.03.2011
(51) Int. Cl.: H04N 7/173, H04N 5/445

(54) **Surfacing on-demand television content**

(30) Priority: 26.03.2010 GB 1005091
(71) Applicant: British Broadcasting Corporation, London W12 7TS (GB)
(72) Inventor: Murison, Jane, London, W12 7TS (GB); Greenham, Andrew, London, W12 7TS (GB); Gammon, Ben, London, W12 7TS (GB); Still, Amelia, London, W12 7TS (GB)
(74) Representative: Leaves, Paul

(57) **Abstract**

A television receiver apparatus is described. The television receiver apparatus comprises an input interface arranged to receive commands from a user, a communication interface arranged to send and receive data over a one-to-one communication network, a broadcast receiver arranged to receive data sent over a broadcast network, a display interface arranged to connect to a display device, and a processor. The processor controls the display device to display an electronic programme guide comprising a schedule of programmes being broadcast and to be broadcast. The processor receives a selection of a programme displayed in the electronic programme guide and a command to find additional episodes of the programme, generates a list of additional episodes of the programme comprising at least one episode available on-demand via the communication interface, and controls the display device to display the list of additional episodes.

## Description

### BACKGROUND

Traditionally, television programmes have been broadcast using a fixed schedule, such that particular programmes are scheduled to be broadcast at particular times. On-demand television offers the potential to change this model, such that any television programme can be delivered immediately to a user, irrespective of any broadcast schedule.

However, because users are unfamiliar with on-demand television, they can find it difficult to locate and access programmes that they want to watch. In particular, the users can be overwhelmed by the selection of programmes available to them on-demand. This can lead to them only watching a small subset of programmes that they are familiar with, and not making use of the breadth of programming available.

Search engines can be provided to enable the user to search for particular programmes available on-demand, but this requires an additional level of interaction and data input from the user, which can be time-consuming and difficult, particularly using a television remote control.

Alternatively, lists of the most popular programmes can be displayed to the user, but these do not necessarily correlate with a given user's tastes. Recommendation algorithms can be used to suggest certain programmes to the user, but the success of these is dependent on having accurate data on the user's preferences, and these algorithms frequently do not work well in the case that many users are using the same television (e.g. in a family setting).

As a result, many users simply revert to viewing broadcast television, even when on-demand content is available.

### SUMMARY

According to one aspect of the invention, there is provided a television receiver apparatus, comprising: an input interface arranged to receive commands from a user; a communication interface arranged to send and receive data over a one-to-one communication network; a broadcast receiver arranged to receive data sent over a broadcast network; a display interface arranged to connect to a display device; and a processor arranged to: control the display device using the display interface to display an electronic programme guide comprising a schedule of programmes being broadcast and to be broadcast; receive via the input interface a selection of a programme displayed in the electronic programme guide and a command to find additional episodes of the programme; generate a list of additional episodes of the programme comprising at least one episode available on-demand via the communication interface; and control the display device using the display interface to display the list of additional episodes.

Because users are already familiar with electronic programme guides, they are able to readily use them to find programmes that they want to watch. Electronic programme guides are also easy to control and navigate using a remote control. By using the electronic programme guide (EPG) to surface additional on-demand episodes of the scheduled programmes, the user can find on-demand television content without being overwhelmed by large lists of all the programmes available. This enables the user to access a mixture of on-demand and broadcast television through a single, unified interface, without requiring additional knowledge on the part of the user.

For example, users can use the EPG to find earlier episodes of a programme that they have missed, but which is available on demand. They can then view the on-demand programmes to catch-up to the episode scheduled to be broadcast, as shown in the EPG.

The processor may be further arranged to receive via the user input interface a request to view a selected episode displayed in the list.

By selecting an additional episode displayed in the list, and requesting to view it on the display device, the user is able to use the EPG to rapidly access and view television content other than the scheduled programmes. The user does not need to be aware of whether the selected episode is delivered using the one-to-one communication network, broadcast network or local storage.

The processor may be further arranged to: determine whether the selected episode is one of the at least one episodes available on-demand and, if so, retrieve the selected episode from the communication network using the communication interface; and control the display device using the display interface to display the selected episode.

The apparatus may further comprise a data storage device, and the processor may be further arranged to: determine whether the selected episode is stored on the data storage device and, if so, retrieve the selected episode from the data storage device; and control the display device using the display interface to display the selected episode.

The processor may be further arranged to: determine whether the selected episode is currently being broadcast and, if so, retrieve the selected episode from the broadcast network using the broadcast receiver; and control the display device using the display interface to display the selected episode.

The television receiver apparatus provides the selected episode using the appropriate delivery mechanism, without requiring knowledge on the part of the user. For example, by providing a data storage device at the television receiver apparatus, programme content can be cached locally. Programmes stored locally can be delivered to the user without using the network bandwidth used for providing on-demand content over the communication network. In another example, if the programme is currently being broadcast, then it can be viewed using the broadcast network, which is more spectrum and bandwidth efficient than on-demand delivery.

The processor may be further arranged to: determine whether the selected episode is to be broadcast after the current time and is not available on-demand, and, if so, record the selected episode from the broadcast network using the broadcast receiver at its time of broadcast. The processor may be further arranged to: determine whether the selected episode is to be broadcast after the current time and not is available on-demand, and, if so, display a reminder message to the user at the time of broadcast of the selected episode.

If the selected programme is not available for viewing at the time of request, then the user can be reminded at the broadcast time, or the selected programme recorded from the broadcast network to a local storage device, which ensures that the user is still able to view the programme, either at the broadcast time, or subsequently.

The processor may be arranged to generate the list of additional episodes by searching metadata for at least one of: programmes available on-demand via the communication interface, programmes shown in the electronic programme guide, and programmes stored locally to the television receiver apparatus. The metadata for programmes available on-demand may be retrieved from the communication network using the communication interface. The metadata for programmes shown in the electronic programme guide may be received periodically via the broadcast interface and stored at the television receiver apparatus.

The use of metadata stored in association with the programmes enables the fast searching of additional episodes related to a selected programme.

According to another aspect of the invention, there is provided a set-top box comprising the above receiver apparatus.

According to another aspect of the invention, there is provided a television set comprising the above receiver apparatus.

According to another aspect of the invention, there is provided a method of accessing a television programme at a television receiver arranged to receive data sent over a broadcast network and send and receive data over a one-to-one communication network, comprising: controlling a display device connected to the television receiver to display an electronic programme guide comprising a schedule of programmes being broadcast and to be broadcast; receiving a user selection of a programme displayed in the electronic programme guide and a command to find additional episodes of the programme; generating a list of additional episodes of the programme comprising at least one episode available on-demand via the communication network; and controlling the display device to display the list of additional episodes.

The method may further comprise the step of receiving a user request to view a selected episode displayed in the list.

The method may further comprise the steps of: determining whether the selected episode is one of the at least one episodes available on-demand and, if so, retrieving the selected episode from the communication network; and controlling the display device to display the selected episode. The method may further comprise the steps of: determining whether the selected episode is stored on a data storage device at the television receiver and, if so, retrieving the selected episode from the data storage device; and controlling the display device to display the selected episode. The method may further comprise the steps of: determining whether the selected episode is currently being broadcast and, if so, retrieving the selected episode from the broadcast network; and controlling the display device to display the selected episode.

The method may further comprise the steps of: determining whether the selected episode is to be broadcast after the current time and is not available on-demand, and, if so, recording the selected episode from the broadcast network at its time of broadcast. The method may further comprise the steps of: determining whether the selected episode is to be broadcast after the current time and not is available on-demand, and, if so, displaying a reminder message to the user at the time of broadcast of the selected episode.

The step of generating the list of additional episodes may comprise searching metadata for at least one of: programmes available on-demand via the communication network, programmes shown in the electronic programme guide, and programmes stored locally to the television receiver. The method may further comprise the step of retrieving the metadata for programmes available on-demand from the communication network. The method may further comprise the steps of periodically receiving the metadata for programmes shown in the electronic programme guide via the broadcast network and storing the metadata at the television receiver.

According to another aspect of the invention, there is provided a computer program comprising computer program code means adapted to perform all the steps of the above method when said program is run on a computer. The computer program may be embodied on a computer readable medium.

The methods described herein may be performed by software in machine readable form on a storage medium. The software can be suitable for execution on a parallel processor or a serial processor such that the method steps may be carried out in any suitable order, or simultaneously. This is intended to encompass software which runs on or controls standard hardware to carry out the desired functions. It is also intended to encompass software which describes or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 illustrates a system for delivering both on-demand and broadcast television programmes;
FIG. 2 illustrates a block diagram of a television receiver;
FIG. 3 illustrates a flow chart of a process for displaying an EPG and surfacing on-demand programmes;
FIG. 4 illustrates a first example EPG display;
FIG. 5 illustrates a second example EPG display; and
FIG. 6 illustrates a list of additional episodes shown in the first example EPG display.

Like reference numerals are used to designate like parts in the accompanying drawings.

### DETAILED DESCRIPTION

The detailed description provided below in connection with the appended drawings is intended as a description of the present examples and is not intended to represent the only forms in which the present example can be constructed or utilised. The description sets forth the functions of the example and the sequence of steps for constructing and operating the example. However, the same or equivalent functions and sequences may be accomplished by different examples.

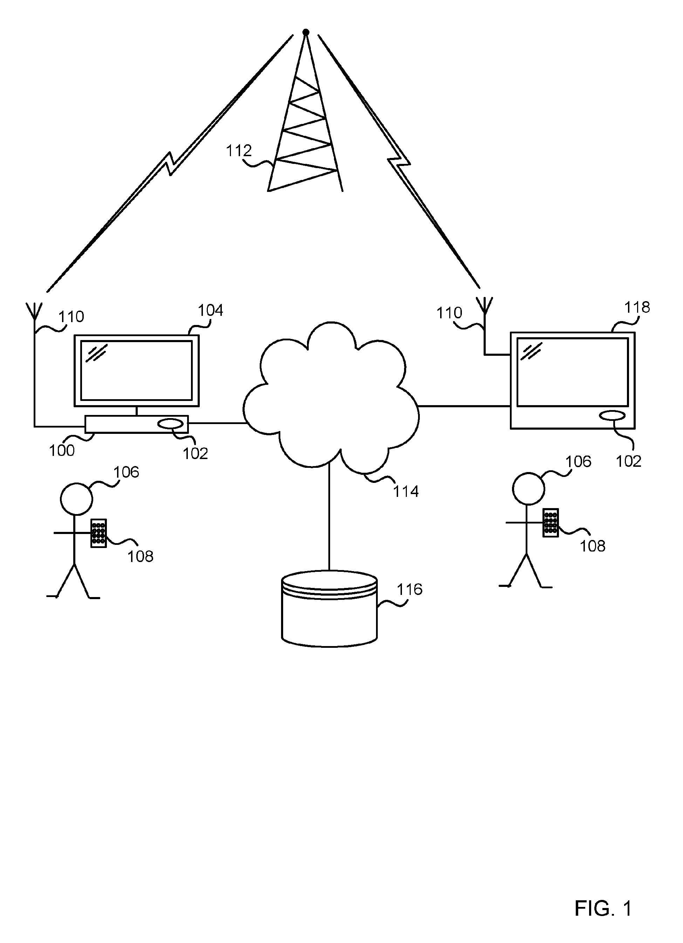

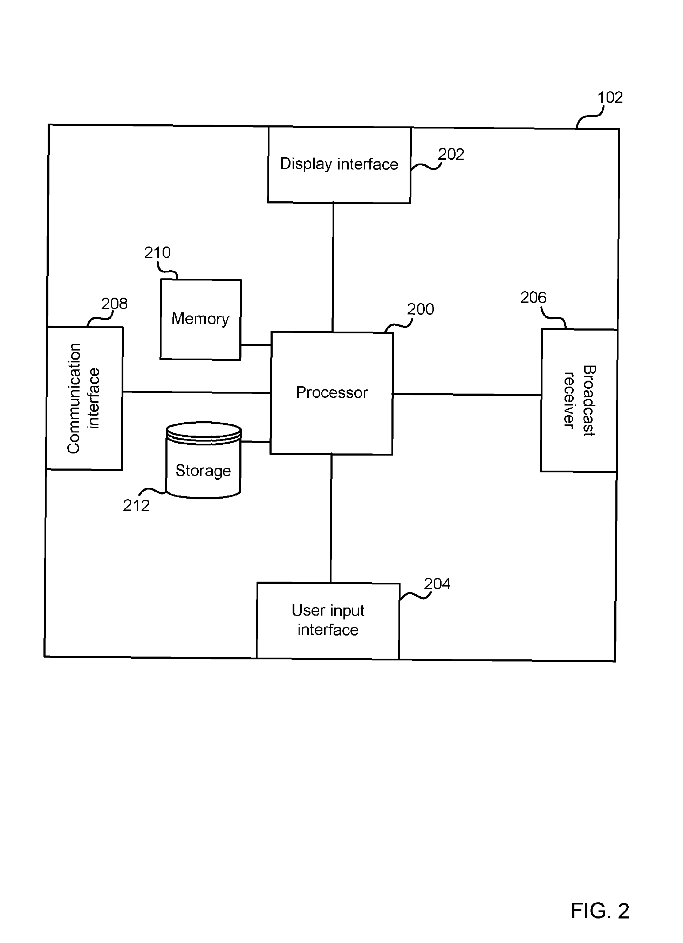

Reference is first made to FIG. 1, which illustrates a system for delivering both on-demand and broadcast television programmes. The system of FIG. 1 includes a set-top box 100 that comprises a television receiver apparatus 102, as will be described in more detail with FIG. 2 hereinafter. The set-top box 100 is connected to a television set 104 arranged to display video (and optionally audio) content to a user 106. The user 106 can control the set-top box 100 and input commands using a remote control 108.

The set-top box 100 is connected to an antenna 110 which is arranged to receive digital broadcast data signals from a broadcast network 112. The term broadcast is intended to cover any form of one-to-many content distribution, and the term broadcast network is intended to encompass the infrastructure used by a broadcaster to distribute content. The digital broadcast data signals comprise television programmes, i.e. audiovisual content suitable for viewing on a television set.

Note that whilst FIG. 1 illustrates a terrestrial broadcast network, any suitable broadcast network can be used, such as satellite broadcast (in which case antenna 110 can be in the form of a parabolic dish) or cable distribution (in which case no antenna is required, but a wired connection to the cable network is used). For example, the broadcast network 112 can be a digital video broadcasting-terrestrial (DVB-T), digital video broadcasting-satellite (DVB-S), and/or digital video broadcasting-cable (DVB-C) system.

The set-top box 100 is also connected to a one-to-one communication network 114, such as the Internet. A one-to-one communication network is a network arranged to provide individually addressed data to a specific device. In other words, a network capable of delivering unicast data.

Optionally, the set-top box 100 can be connected to the communication network via one or more intermediate network elements, such as a router or modem, or one or more intermediate networks, such as a local area network or wireless network (not shown in FIG. 1).

Connected to the communication network 114 are one or more network servers 116 that are arranged to deliver television programmes (i.e. audiovisual content suitable for viewing on a television set similar to that delivered by the broadcast network) over the communication network. In other words, the servers 116 are arranged to provide on-demand television programmes to the set-top box 100 via the communication network 114. The servers 116 can be operated by the same broadcaster providing the television content over the broadcast network 112, or operated by a third party.

The term on-demand is intended to cover television programmes that are provided to a user responsive to a specific request for that programme. The delivery of the on-demand programme over the one-to-one communication network 114 does not need to be instantaneous, and can be subject to delays due to, for example, server loading or network congestion.

In use, the television receiver apparatus 102 in the set-top box 100 is arranged to receiver either television programmes broadcast over the broadcast network 112 or television programmes retrieved on-demand from the servers 116 over the communication network 114. The operation of the television receiver apparatus 102 is described in more detail below with reference to FIG. 2.

FIG. 1 also illustrates a television set 118 having an integrated television receiver apparatus 102, enabling the television set 118 to connect to the broadcast network 112 and communication network 114 without the use of a set-top box.

Reference is now made to FIG. 2, which illustrates the structure of television receiver apparatus 102 in more detail. The television receiver apparatus 102 comprises at least one processor 200 arranged to execute instructions (in the form of software code) to control the operation of the television receiver apparatus 102. The processor 200 is connected to a display interface 202, which is arranged to interface with the television set 104 such that the television set 104 can be controlled to display video (e.g. television programmes) or present one or more user interfaces to the user 106, as described hereinafter. Also connected to the processor 200 is a user input interface 204 arranged to receive inputs from the user 106, e.g. from the remote control 108, and provide these to the processor 200 in the form of commands.

The processor 200 is further connected to a broadcast receiver, which is arranged to receive data signals from the broadcast network 112 (e.g. via the antenna 110), and decode them to produce television programme content. For example, in the case of a terrestrial broadcast network, the broadcast receiver 206 can comprise a radio frequency receiver, analogue to digital converter, demodulator and decoder. However, the detailed implementation of the broadcast receiver 206 is dependent on the transmission technology used for the broadcast network (e.g. terrestrial, satellite or cable). The processor 200 controls the broadcast receiver 206 to select a particular broadcast to receive.

The processor 200 is also connected to a communication interface 208. The communication interface is arranged to interface (directly or indirectly) with the one-to-one communication network 114 to enable the processor 200 to transmit and receive data over the communication network 114. The communication interface 208 can comprise data networking functionality (e.g. Ethernet or modem functionality) or can comprise simple data exchange functionality for communicating with an intermediate network element (such as USB).

A memory 210 can be connected to the processor 200 for storing executable instructions that can be run on the processor and for storing data used by the processor during the execution of these instructions. A storage device 212 such as a hard disk or solid state drive can be connected to the processor 200 and arranged to store large quantities of data such as recorded television programmes. Note that, in other examples, the memory 210 and storage device 212 can be integrated. In a further example, the storage device 212 can be separate from the television receiver apparatus 102, for example accessible via the communication interface 208.

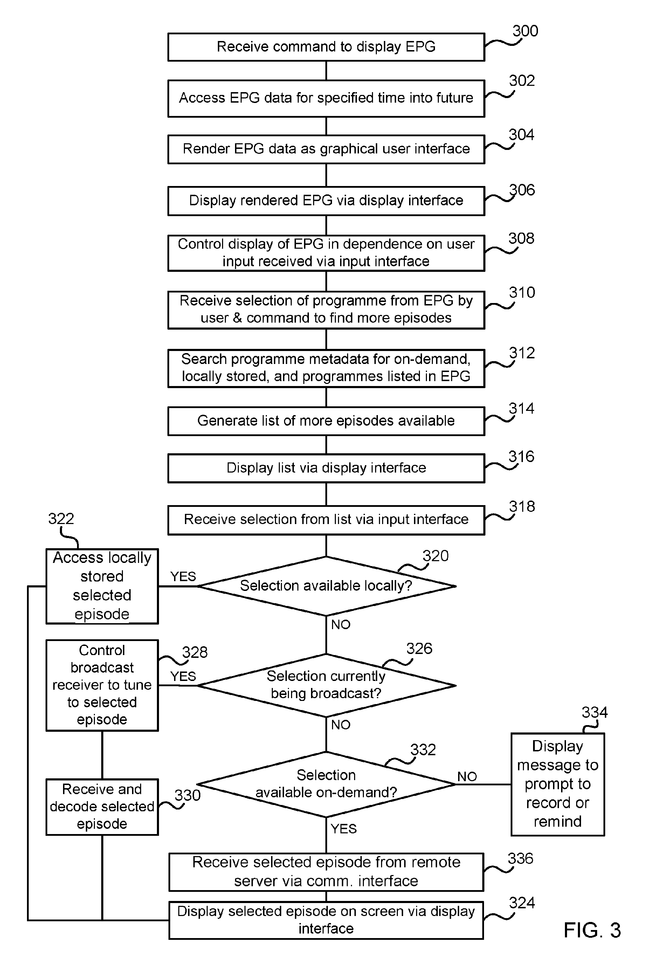

Reference is now made to FIG. 3, which illustrates a flowchart of a process performed by the processor 200 of the television receiver apparatus 102. Firstly, in step 300, the processor 200 receives from the user input interface 204 a command to display an EPG. The command can originate from the user 106 using the remote control 108. Then, in step 302, the processor 200 accesses EPG data to determine the television programme schedule for the current time and a time interval into the future. The time interval into the future can be any suitable time period, depending on the availability of EPG data and the amount of data storage at the television receiver.

In some examples, the EPG data can be stored locally at the television receiver apparatus 102 (e.g. at the memory 210 or storage device 212). Alternatively, the EPG data can be stored locally to, but not at, the television receiver apparatus 102 (e.g. within storage at the set top box 100 or television set 118 and accessed via the communication interface 208). If the EPG data is stored locally, it can be periodically updated with data from either the broadcast network 112 (received via the broadcast receiver 206) or the communication network 114 (received via the communication interface 208). The EPG data can be stored as a database, and maintained in accordance with the periodic updates. Alternatively, the EPG data can be fetched when required over the communication network 114 (using the communication interface 208) from a network element such as server 116 (or a separate, dedicated EPG server).

In step 304, the EPG data is rendered as part of a graphical user interface. In one example, the EPG data can be arranged as a list of programmes scheduled for a selected channel. In another example, the EPG data can be rendered as a table with a list of channels along one axis, time along the other axis, and programme information in the cells of the table. The graphical user interface can be paginated, such that the user 106 is only presented with a portion of the whole EPG data (e.g. only a limited time range, limited channel selection, or both), and can move between pages of data as required. In step 306, the processor 200 uses the display interface 202 to control the television set 104, 118 to display the graphical user interface comprising the rendered EPG to the user 106.

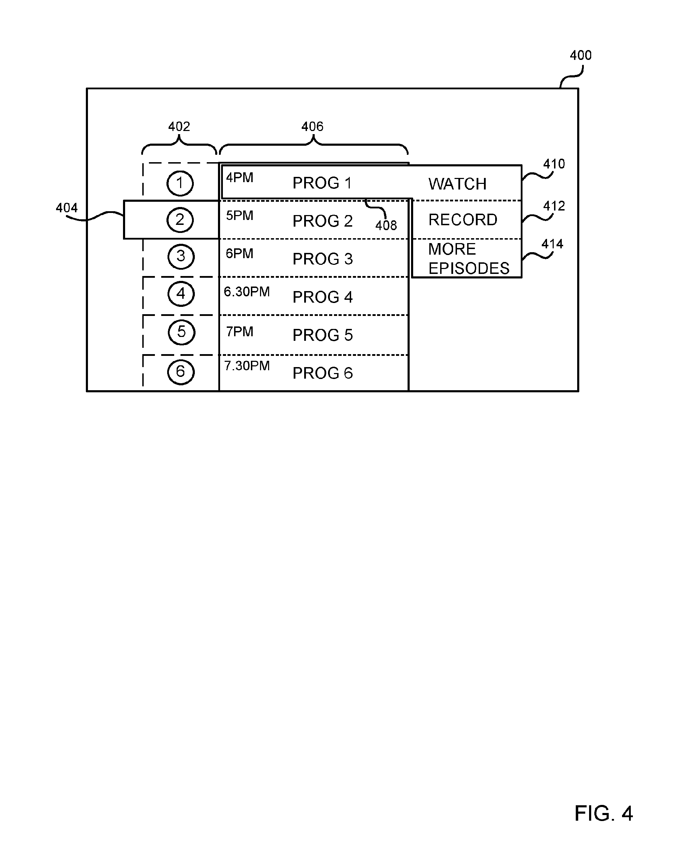

FIG. 4 illustrates a first example graphical rendering of an EPG 400. FIG.4 shows an EPG 400 comprising a list of channels 402, of which one channel 404 (channel 2 in this case) is selected. A list 406 of programmes being broadcast and scheduled to be broadcast after the current time are shown for the selected channel 404. The current time (in this illustrative example, 4pm) is shown at the top of the list 406. In some examples, the list 406 can be configured to display the schedule running from the closest hour prior to the current time.

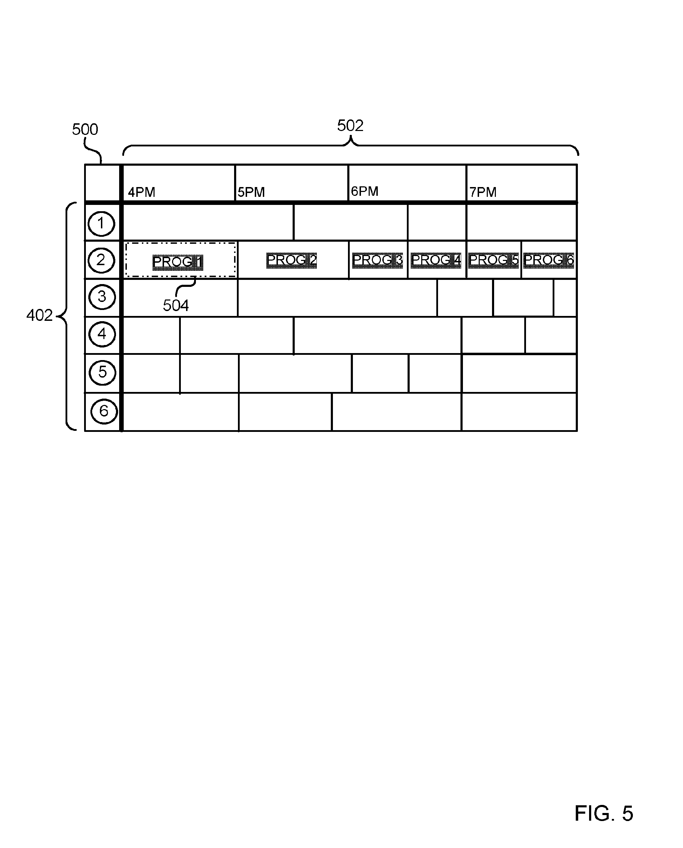

FIG. 5 illustrates a second example graphical rendering of an EPG 500. FIG. 5 shows an EPG 500 of tabular form comprising a y-axis showing the six channels 402 and an x-axis showing time 502. The time axis of the EPG display is aligned to the closest hour prior to the current time (i.e. 4pm in this case). In some examples, this can be the default view for the EPG 500, as it allows the user to readily see the programmes currently being broadcast. However, in other examples, other alignments of the time axis of the EPG can be used. Programme information, such as titles, is contained within the cells of the EPG 500, and the cells are aligned with the time axis to correspond with the scheduled broadcast time of the programmes.

Returning again to FIG. 3, in step 308 commands are received from the user 106 (via the user input interface 204) to control the display of the EPG 400, 500 on the television set 104, 118. The user 106 can use the remote control 108 to move between the channels 402 shown in the EPG 400, 500 and navigate the programmes to display the schedule information for different times. The user can do this by using dedicated controls on the remote control 108, or by selecting controls in the displayed EPG (not shown in FIG. 4 or 5).

The user 106 is also able to use the remote control 108 to select an individual programme within the EPG 400, 500 and is presented with further options relating to the programme. For example, as shown in FIG. 4, the user has selected 'PROG 1', as indicated by box 408, and is presented with several options.

A first option 410 is to watch the programme selected in the EPG. If this option is selected, the processor 200 controls the broadcast receiver 206 to tune to the channel of the selected programme, and the programme is received and decoded. The processor 200 then displays the channel from the broadcast network 112 on the television set 104, 118.

A second option 412 is to record the programme selected in the EPG. If this option is selected, the processor 200 controls the controls the broadcast receiver 206 to tune to the channel of the selected programme, and the programme is received. The processor 200 then stores the data for the broadcast programme on the storage device 212 for later viewing.

A third option 414 is to find more episodes of the programme selected in the EPG. This option is discussed in more detail below with reference to the remainder of FIG. 3. Similar options to those shown in FIG. 4 can also be displayed in the tabular EPG of FIG. 5. For example, if the user selects 'PROG 1' in EPG 500, as shown by selection box 504, then a pop-up menu (not shown in FIG. 5) can be displayed having the options mentioned above.

Returning to FIG. 3, in step 310 the processor 200 receives the selection of a programme in the EPG 400, 500 from the user 106 via the user input interface 204, and also receives a command to find more episodes of the selected programme from the user 106 via the user input interface 204 (e.g. by the user selecting the third option 414 in FIG. 4).

In step 312, the processor reads metadata for the selected programme (such as its title and episode number) and then searches metadata available for other programmes in order to find additional episodes of the selected programme. The metadata for the selected programme can be stored as part of the EPG data already held at the television receiver apparatus 102. In an alternative example, the metadata for the selected programme can be retrieved when required over the communication network 114 (using the communication interface 208) from a network element such as server 116 (or a separate metadata server).

To find additional episodes, the television receiver searches metadata for programmes available on-demand from the server 116. In one example, the processor 200 submits a request to the server 116 over the communication network 114 (using the communication interface 208) for a list of available episodes of the selected programme, and the server 116 performs the search and returns the results. In another example, the television receiver has locally stored metadata for the programmes available on-demand, and the processor 200 performs the search on the locally stored metadata. Such locally stored metadata can be periodically fetched over the communication network using the communication interface 208.

In addition to searching additional episodes amongst the programmes available on-demand, the processor 200 can also search for additional episodes of the selected programme that are already stored locally at the storage device 212. For example, additional episodes of the selected programme may have been recorded and stored in the storage device. Metadata is stored in association with a locally stored programme on the storage device 212, and the processor 200 can therefore search the metadata for locally stored programmes to determine if any of them are additional episodes of the selected programme.

Furthermore, the processor 200 can also search for additional episodes of the selected programme that amongst the other programmes listed in the EPG data. In other words, the processor 200 can determine whether additional episodes of the selected programme are either being currently broadcast, or are scheduled to be broadcast. This includes searching on different channels to the one on which the selected programme is being/to be shown.

The EPG searching can be performed by the processor searching metadata associated with each of the programmes listed in the EPG. This metadata can be provided with the EPG data, and stored locally at the television receiver. For example, the EPG data and associated programme metadata can be periodically transmitted from the broadcast network 112 and stored by the television receiver apparatus 102. Alternatively, the television receiver apparatus 102 can use the communication interface 208 to fetch the metadata over the communication network from a network element such as server 116.

Once the processor 200 has searched for additional episodes of the selected programme, it can generate a results list in step 314. The results list can, for example, comprise all programmes found having matching metadata for the title of the programme. Optionally, the processor 200 can also prune the results list by removing duplicates of the same episode (e.g. one available on-demand, and one locally stored, or the same episode scheduled to be broadcast several times in the EPG). Optionally, the processor 200 can also remove from the list the same episode as that selected in the EPG.

The processor 200 also sorts the result list. In one example, the processor 200 sorts the result list by episode, such that the results are shown in episode order. Alternatively, the results list can be sorted by the source of the episode. For example, the results list can be sorted into categories such that it comprises the episodes available on-demand over the communication network in one category, the episodes already locally stored in another category, and the episodes listed in the EPG in further category.

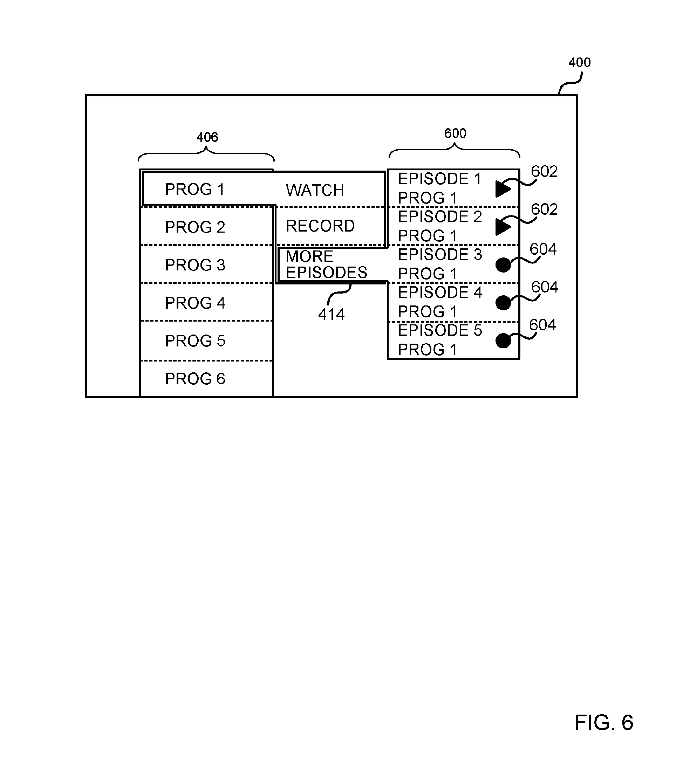

In step 316, the processor 200 uses the display interface 202 to display the results list on the television set 104, 118. An example display of the results list is shown illustrated in FIG. 6. The example of FIG. 6 shows an additional episodes results list 600 comprising five additional episodes. The results list 600 in FIG. 6 has been sorted by episode number, not by source. Icons are shown next to each episode to indicate further actions that be taken, as outlined in more detail below. For example, the triangle icon 602 indicates that the episode in question can be viewed now, and the circle icon 604 indicates that the episode in question can be recorded. Other icons can also be used to indicate further actions as mentioned hereinafter.

In step 318 of FIG. 3, the processor 200 receives via the user input interface 204 a selection of one of the episodes shown in the result list 600 and request to view (if possible) the selected episode. In step 320, it is determined whether the selected episode is already stored at the storage device 212. This can occur, for example, if the user has previously chosen to record the selected programme and it was recorded from the broadcast network 112 to the storage device 212. If the selected programme is available at the storage device 212, then the selected programme is accessed on the storage device 212 in step 322 and displayed in step 324 on the television set 104, 118 via the display interface 202.

In this example, if a selected episode is stored locally and available from other sources (such as on-demand via the communication network), then the locally stored episode is displayed by preference. This is because the locally stored version does not require the use of any networks, and hence does not cause network loading or require any bandwidth.

If the selected episode is not available at the storage device 212 in step 320, then it is determined in step 326 whether the selected episode is currently being broadcast over the broadcast network 112. If it is determined that the selected programme is currently being broadcast, then in step 328 the processor 200 controls the broadcast receiver 206 to tune to the channel of the selected programme, and the programme is received and decoded in step 330. The processor 200 then displays the selected programme from the broadcast network 112 on the television set 104, 118 in step 324.

The selected programme is viewed using the broadcast network 112 if it is currently being broadcast as it is more bandwidth efficient to obtain the programme using a one-to-many distribution technique such as broadcasting than a one-to-one technique such as on-demand retrieval over the communication network 114. In addition, in some examples, the video quality of the broadcast programmes can be higher than those retrieved on-demand.

If the selected episode is not currently being broadcast over the broadcast network 112, then it is determined in step 332 whether the selected episode is available on-demand via the communication network 114. If the selected programme is not available on-demand in step 332, then this means that the selected episode is scheduled to be broadcast at some time in the future (as all other options are ruled out). In this case, in step 334, a prompt is optionally displayed to the user 106 in the user interface displayed on the television set 104, 118 enabling the user to select whether to record the selected programme from the broadcast network 112 at its scheduled broadcast time (e.g. to storage device 212) or to be shown a reminder message at the broadcast time. This ensures that the user is still able to view the programme, either at the broadcast time, or subsequently.

If it is determined in step 332 that the selected episode is available on-demand, then in step 336 the selected episode is streamed from the servers 116 over the communication network 114, received via the communication interface 208, and displayed in step 324 on the television set 104, 118 via the display interface 202.

The above-described process therefore surfaces on-demand television programmes through a familiar EPG user interface, but also ensures that the content is not fetched using on-demand if a more efficient delivery mechanism is available. The user 106 does not need to be aware of the delivery mechanism of the programme that has been selected.

Those skilled in the art will appreciate that memory devices utilised to store program instructions can be distributed across a network. For example, a remote computer may store an example of the process described above. A local processor may access the remote computer and download a part or all of the software to run the program. Alternatively, the local processor may download pieces of the software as needed, or execute some software instructions at the local processor and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. It will further be understood that reference to 'an' item refer to one or more of those items. The steps of the methods described herein may be carried out in any suitable order, or simultaneously where appropriate.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the scope of this invention.

## Claims

1. A television receiver apparatus, comprising:
an input interface arranged to receive commands from a user;
a communication interface arranged to send and receive data over a one-to-one communication network;
a broadcast receiver arranged to receive data sent over a broadcast network;
a display interface arranged to connect to a display device; and
a processor arranged to: control the display device using the display interface to display an electronic programme guide comprising a schedule of programmes being broadcast and to be broadcast; receive via the input interface a selection of a programme displayed in the electronic programme guide and a command to find additional episodes of the programme; generate a list of additional episodes of the programme comprising at least one episode available on-demand via the communication interface; and control the display device using the display interface to display the list of additional episodes.

2. An apparatus according to claim 1, wherein the processor is further arranged to receive via the user input interface a request to view a selected episode displayed in the list.

3. An apparatus according to claim 2, wherein the processor is further arranged to: determine whether the selected episode is one of the at least one episodes available on-demand and, if so, retrieve the selected episode from the communication network using the communication interface; and control the display device using the display interface to display the selected episode.

4. An apparatus according to claim 2 or 3, wherein the apparatus further comprises a data storage device, and the processor is further arranged to: determine whether the selected episode is stored on the data storage device and, if so, retrieve the selected episode from the data storage device; and control the display device using the display interface to display the selected episode.

5. An apparatus according to claim 2, 3 or 4, wherein the processor is further arranged to: determine whether the selected episode is currently being broadcast and, if so, retrieve the selected episode from the broadcast network using the broadcast receiver; and control the display device using the display interface to display the selected episode.

6. An apparatus according to any of claims 2 to 5, wherein the processor is further arranged to: determine whether the selected episode is to be broadcast after the current time and is not available on-demand, and, if so, record the selected episode from the broadcast network using the broadcast receiver at its time of broadcast.

7. An apparatus according to any of claims 2 to 5, wherein the processor is further arranged to: determine whether the selected episode is to be broadcast after the current time and not is available on-demand, and, if so, display a reminder message to the user at the time of broadcast of the selected episode.

8. An apparatus according to any preceding claim, wherein the processor is arranged to generate the list of additional episodes by searching metadata for at least one of: programmes available on-demand via the communication interface, programmes shown in the electronic programme guide, and programmes stored locally to the television receiver apparatus.

9. An apparatus according to claim 8, wherein the metadata for programmes available on-demand is retrieved from the communication network using the communication interface.

10. An apparatus according to claim 8 or 9, wherein the metadata for programmes shown in the electronic programme guide is received periodically via the broadcast interface and stored at the television receiver apparatus.

11. A set-top box comprising the receiver apparatus of any preceding claim.

12. A television set comprising the receiver apparatus of any preceding claim.

13. A method of accessing a television programme at a television receiver arranged to receive data sent over a broadcast network and send and receive data over a one-to-one communication network, comprising:
controlling a display device connected to the television receiver to display an electronic programme guide comprising a schedule of programmes being broadcast and to be broadcast;
receiving a user selection of a programme displayed in the electronic programme guide and a command to find additional episodes of the programme;
generating a list of additional episodes of the programme comprising at least one episode available on-demand via the communication network; and
controlling the display device to display the list of additional episodes.

14. A computer program comprising computer program code means adapted to perform all the steps of the method of claim 13 when said program is run on a computer.

15. A computer program as claimed in claim 14 embodied on a computer readable medium.
